(19) Europäisches Patentamt / European Patent Office / Office européen des brevets

(11) **EP 2 288 955 B1**

(12) **EUROPÄISCHE PATENTSCHRIFT**

(45) Veröffentlichungstag und Bekanntmachung des Hinweises auf die Patenterteilung:
**09.11.2016 Patentblatt 2016/45**

(51) Int Cl.:
**G02B 27/09** (2006.01)   **H01S 3/00** (2006.01)

(21) Anmeldenummer: **09757332.3**

(22) Anmeldetag: **05.06.2009**

(86) Internationale Anmeldenummer:
**PCT/EP2009/004077**

(87) Internationale Veröffentlichungsnummer:
**WO 2009/146949 (10.12.2009 Gazette 2009/50)**

(54) **VORRICHTUNG UND VERFAHREN ZUR STRAHLFORMUNG**

DEVICE AND METHOD FOR BEAM FORMING

DISPOSITIF ET PROCÉDÉ DE MISE EN FORME DE FAISCEAU

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **06.06.2008 DE 102008027231**

(43) Veröffentlichungstag der Anmeldung:
**02.03.2011 Patentblatt 2011/09**

(73) Patentinhaber: **LIMO Patentverwaltung GmbH & Co. KG**
**44319 Dortmund (DE)**

(72) Erfinder:
• **MITRA, Thomas**
  **44309 Dortmund (DE)**
• **ASCHKE, Lutz**
  **58300 Wetter (DE)**
• **BARTOSCHEWSKI, Daniel**
  **45883 Gelsenkirchen (DE)**

(74) Vertreter: **Basfeld, Rainer et al**
**Fritz Patent- und Rechtsanwälte**
**Partnerschaft mbB**
**Postfach 1580**
**59705 Arnsberg (DE)**

(56) Entgegenhaltungen:
**WO-A1-2007/140969    US-A1- 2004 061 952**
**US-A1- 2005 157 762**

EP 2 288 955 B1

**Beschreibung**

Die vorliegende Erfindung betrifft eine Vorrichtung zur Strahlformung gemäß dem Oberbegriff des Anspruchs 1. Weiterhin betrifft die vorliegende Erfindung ein Verfahren zur Strahlformung.

Definitionen: In Ausbreitungsrichtung der Laserstrahlung meint mittlere Ausbreitungsrichtung der Laserstrahlung, insbesondere wenn diese keine ebene Welle ist oder zumindest teilweise divergent ist.

Mit Laserstrahl, Lichtstrahl, Teilstrahl oder Strahl ist, wenn nicht ausdrücklich anderes angegeben ist, kein idealisierter Strahl der geometrischen Optik gemeint, sondern ein realer Lichtstrahl, wie beispielsweise ein Laserstrahl mit einem Gauß-Profil oder einem modifizierten Gauß-Profil, der keinen infinitesimal kleinen, sondern einen ausgedehnten Strahlquerschnitt aufweist. Mit Top-Hat-Verteilung oder Top-Hat-Intensitätsverteilung oder Top-Hat-Profil ist eine Intensitätsverteilung gemeint, die sich zumindest hinsichtlich einer Richtung im Wesentlichen durch eine Rechteckfunktion (rect (x)) beschreiben lässt. Dabei sollen reale Intensitätsverteilungen, die Abweichungen von einer Rechteckfunktion im Prozentbereich beziehungsweise geneigte Flanken aufweisen, ebenfalls als Top-Hat-Verteilung oder Top-Hat-Profil bezeichnet werden.

Eine Vorrichtung gemäß dem Oberbegriff des Anspruchs 1 ist aus der US 2005/0157762 A1 bekannt. Die darin beschriebene Vorrichtung umfasst eine Mehrzahl von Laserlichtquellen, die Single-Mode-Laserstrahlungen aussenden können. Die von diesen Laserlichtquellen ausgehenden Laserstrahlungen werden in einer Arbeitsebene nebeneinander angeordnet, so dass die Flanken der einzelnen Laserstrahlungen überlappen und eine Top-Hat-Intensitätsverteilung in der Arbeitsebene entsteht. Die Vorrichtung umfasst eine Mehrzahl von Spiegeln oder anderen geeigneten Umlenkmitteln, um die einzelnen Laserstrahlungen nebeneinander anzuordnen.

Eine weitere Vorrichtung zur Strahlformung ist aus der WO 2007/140 969 A1 bekannt. Durch die darin beschriebene Vorrichtung kann in einer Arbeitsebene eine schmale, linienförmige und relativ homogene Intensitätsverteilung erzielt werden. Es gibt Anwendungen, wie beispielsweise die Rekristallisation von Si-Schichten für die Herstellung von Flachbildschirmen oder Solarzellen, die sehr intensive und sehr homogene Linien erfordern. Dies ist bei der aus dem genannten Stand der Technik bekannten Vorrichtung nur mit sehr großem apparativem Aufwand möglich.

Das der vorliegenden Erfindung zugrunde liegende Problem ist die Schaffung einer Vorrichtung der eingangs genannten Art, mit der sich homogenere und/oder intensivere Intensitätsverteilungen mit geringerem Aufwand erzeugen lassen. Weiterhin liegt der vorliegenden Erfindung das Problem zugrunde, ein Verfahren zur Strahlformung anzugeben, mit dem sich homogenere und/oder intensivere Intensitätsverteilungen mit geringerem Aufwand erzeugen lassen.

Das erste der Probleme wird erfindungsgemäß durch eine Vorrichtung der eingangs genannten Art mit den kennzeichnenden Merkmalen des Anspruchs 1 gelöst. Das zweite der Probleme wird erfindungsgemäß durch ein Verfahren der eingangs genannten Art mit den kennzeichnenden Merkmalen des Anspruchs 8 gelöst. Die Unteransprüche betreffen bevorzugte Weiterbildungen der Erfindung.

Es ist vorgesehen, dass die Optikmittel mehrere optisch funktionale Transformationsgrenzflächen umfassen, wobei der Laserstrahlung einer jeder der Laserlichtquellen eine der Transformationsgrenzflächen derart zugeordnet ist, dass jeweils die Laserstrahlung einer der Laserlichtquellen durch die zugeordnete Transformationsgrenzfläche derart hindurch treten kann, dass sie nach der Transformation zumindest hinsichtlich einer Richtung senkrecht zur Ausbreitungsrichtung eine Top-Hat-Winkelverteilung aufweist, wobei die Optikmittel Linsenmittel in einer Fourieranordnung umfassen, die die Laserstrahlung der mindestens zwei Laserlichtquellen überlagern können, wobei die Linsenmittel in Ausbreitungsrichtung der zu beeinflussenden Laserstrahlung hinter den mehreren Transformationsgrenzflächen angeordnet sind. Dabei erhöht die Überlagerung noch die Stabilität der bereits sehr stabilen Single-Mode-Laserlichtquellen, weil die Schwankungen der einzelnen Laserlichtquellen durch die Überlagerung heraus gemittelt werden. Durch die Verwendung mehrerer Single-Mode-Laserlichtquellen lässt sich weiterhin die Leistung der Intensitätsverteilung in der Arbeitsebene einfacher skalieren, beispielsweise durch die Hinzufügung oder Entfernung einer oder mehrerer Laserlichtquellen.

Eine Transformationsgrenzfläche kann beispielsweise als Powelllinse ausgebildet sein oder Teil einer Powelllinse sein.

Durch die Zuordnung einer jeder der Laserlichtquellen zu einer der Transformationsgrenzflächen wird die Laserstrahlung einer jeden der Laserlichtquellen separat in eine Top-Hat-Winkelverteilung transformiert. Durch die Überlagerung dieser Top-Hat-Winkelverteilungen wird in der Arbeitsebene eine sehr homogene Intensitätsverteilung erzeugt. Insbesondere können die Transformationsgrenzflächen in einem Array angeordnet sein.

Durch die Linsenmittel werden die einzelnen Single-Mode-Laserstrahlungen in der Arbeitsebene überlagert, wobei gleichzeitig die Top-Hat-Winkelverteilung in eine Top-Hat-Intensitätsverteilung umgewandelt wird. Die Linsenmittel in Fourieranordnung tragen somit zur Erhöhung der Homogenität bei.

Es besteht die Möglichkeit, dass die Laserlichtquellen unterschiedliche Wellenlängen aufweisen und/oder unterschiedliche Lasertypen sind. Dadurch kann die spektrale Zusammensetzung der Intensitätsverteilung gezielt beeinflusst werden.

Es kann vorgesehen sein, dass die Transformationsgrenzflächen unsymmetrisch ausgebildet sind. Dadurch können Abbildungsfehler der Linsenmittel in Fourieranordnung korrigiert werden. Bei entsprechend unsymmetrischer Ausgestaltung der Transformationsgrenzflächen kann auch die Überlagerungsfunktion der Linsenmittel in die Transformationsgrenzflächen integriert werden. Es kann weiterhin vorgesehen sein, dass mindestens zwei Transformationsgrenzflächen in Ausbreitungsrichtung der zu beeinflussenden Laserstrahlung hintereinander angeordnet sind. Dadurch kann eine Transformationsoptik mit einer sehr großen numerischen Apertur geschaffen werden, bei der sehr große Winkelbereiche ausgenutzt werden können.

Das Verfahren zur Strahlformung umfasst folgende Verfahrensschritte:

- die von mindestens einer ersten und mindestens einer zweiten Laserlichtquelle ausgehenden Laserstrahlungen, die jeweils zumindest hinsichtlich einer ersten Richtung senkrecht zur Ausbreitungsrichtung eine Single-Mode-Laserstrahlungen sind, werden getrennt voneinander durch jeweils eine Transformationsgrenzfläche derart transformiert, dass die mindestens zwei Laserstrahlungen nach der Transformation zumindest hinsichtlich der ersten Richtung eine Top-Hat-Winkelverteilung aufweisen,

- die mindestens zwei nach der Transformation zumindest hinsichtlich der ersten Richtung eine Top-Hat-Winkelverteilung aufweisenden Laserstrahlungen werden von Linsenmitteln in einer Fourieranordnung überlagert, so dass die überlagerten Laserstrahlungen in einer Arbeitsebene eine Intensitätsverteilung aufweisen, die zumindest hinsichtlich der ersten Richtung einer Top-Hat-Intensitätsverteilung entspricht.

Durch die getrennte Transformation der Single-Mode-Laserstrahlungen und deren anschließende Überlagerung lassen sich deutlich homogenere Intensitätsverteilungen, beispielsweise sehr homogene linienförmige Intensitätsverteilungen erzielen.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen

Fig. 1     eine schematische Draufsicht auf eine erste Ausführungsform einer erfindungsgemäßen Vorrichtung;

Fig. 2     eine schematische Draufsicht auf eine zweite Ausführungsform einer erfindungsgemäßen Vorrichtung;

Fig. 3     eine schematische Draufsicht auf eine dritte Ausführungsform einer erfindungsgemäßen Vorrichtung;

Fig. 4a    eine schematische Draufsicht auf eine vierte Ausführungsform einer erfindungsgemäßen Vorrichtung;

Fig. 4b    eine schematische Seitenansicht der vierten Ausführungsform gemäß Fig. 4a;

Fig. 5a    eine schematische Seitenansicht einer fünften Ausführungsform einer erfindungsgemäßen Vorrichtung;

Fig. 5b    eine schematische Draufsicht auf die fünfte Ausführungsform gemäß Fig. 5a;

Fig. 6a    eine schematische Draufsicht auf eine sechste Ausführungsform einer erfindungsgemäßen Vorrichtung;

Fig. 6b    eine schematische Seitenansicht der sechsten Ausführungsform gemäß Fig. 6a;

Fig. 7     eine schematische Seitenansicht einer Vorrichtung zur Strahlformung;

Fig. 8     eine schematische Seitenansicht einer Vorrichtung zur Strahlformung;

Fig. 9     eine schematische Seitenansicht einer Vorrichtung zur Strahlformung.

In einigen der Figuren ist ein kartesisches Koordinatensystem zur besseren Übersicht eingezeichnet. Gleiche oder funktional gleiche Teile sind in den verschiedenen Figuren mit gleichen Bezugszeichen versehen.

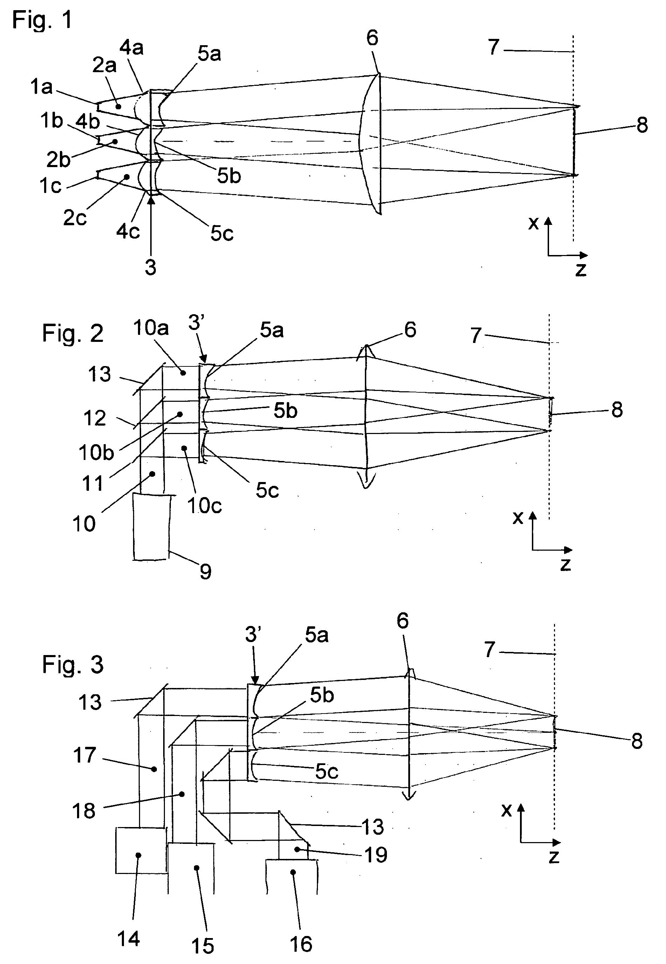

Die aus Fig. 1 ersichtliche Ausführungsform einer erfindungsgemäßen Vorrichtung umfasst drei Laserlichtquellen 1a, 1b, 1c, von denen Laserstrahlung 2a, 2b, 2c ausgeht. Es kann sich bei den Laserlichtquellen 1a, 1b, 1c um in X-Richtung beziehungsweise Slow-Axis-Richtung nebeneinander angeordnete Emitter eines Laserdiodenbarrens handeln. Hinsichtlich der Slow-Axis-Richtung ist eine jede der Laserstrahlungen 2a, 2b, 2c eine Single-Mode-Laserstrahlung.

Auch hinsichtlich der Fast-Axis-Richtung kann eine jede der Laserstrahlungen 2a, 2b, 2c eine Single-Mode-Laserstrahlung sein. Es besteht die Möglichkeit, dass mindestens eine nicht abgebildete Fast-Axis-Kollimationslinse vorgesehen ist, die die Laserstrahlung 2a, 2b, 2c hinsichtlich der Fast-Axis kollimieren kann.

Weiterhin umfasst die Vorrichtung ein Array 3, das in Ausbreitungsrichtung Z der Laserstrahlung 2a, 2b, 2c hinter den Laserlichtquellen 1a, 1b, 1c angeordnet ist. Auf seiner Eintrittsseite weist das Array 3 eine Mehrzahl von konvexen Grenzflächen 4a, 4b, 4c auf, die als Slow-Axis-Kollimationslinsen für die Laserstrahlung 2a, 2b, 2c dienen. Dabei tritt jeweils die Laserstrahlung 2a, 2b, 2c einer der Laserlichtquellen 1a, 1b, 1c in eine der konvexen Grenzflächen 4a, 4b, 4c ein. Auf seiner Austrittsseite weist das Array 3 eine Mehrzahl von nebeneinander angeordneten optisch funktionalen Transformationsgrenzflächen 5a, 5b, 5c auf. Die Transformationsgrenzflächen 5a, 5b, 5c dienen zur Umwandlung des gaußförmigen Intensitätsprofils der Laserstrahlungen 2a, 2b, 2c in eine Top-Hat-Winkelverteilung hinsichtlich der Slow-Axis-Richtung beziehungsweise hinsichtlich der X-Richtung, wie im Nachfolgenden noch detaillierter beschrieben wird.

In Ausbreitungsrichtung Z der Laserstrahlung 2a, 2b, 2c sind hinter dem Array 3 Linsenmittel 6 in Fourieranordnung vorgesehen. Die Linsenmittel 6 können beispielsweise eine sphärische oder anamorphotische Sammellinse sein. Die Linsenmittel 6 sind als Einzellinse abgebildet, können aber auch aus mehreren Einzellinsen bestehen.

Aufgrund der Top-Hat-Winkelverteilung müssen die Transformationsgrenzflächen 5a, 5b, 5c nicht in der eingangsseitigen Brennebene den Linsenmitteln 6 angeordnet sein. In der ausgangsseitigen Brennebene der Linsenmittel 6 befindet sich eine Arbeitsebene 7, in der durch Überlagerung der von den drei Laserlichtquellen 1a, 1b, 1c ausgehenden Laserstrahlungen 2a, 2b, 2c eine linienförmige Intensitätsverteilung 8 erzeugt wird. Diese linienförmige Intensitätsverteilung 8 weist in der Richtung X der Erstreckung der linienförmigen Intensitätsverteilung 8 eine Top-Hat-Verteilung auf, die durch Fouriertransformation der Top-Hat-Winkelverteilung entsteht, die von den einzelnen Transformationsgrenzflächen 5a, 5b, 5c erzeugt wird.

Wenn eine jede der Laserstrahlungen 2a, 2b, 2c auch hinsichtlich der Y-Richtung eine Single-Mode-Laserstrahlung ist, lässt sich die Laserstrahlung hinsichtlich der Y-Richtung besser in die linienförmige Intensitätsverteilung 8 fokussieren. Das bedeutet, dass kleinere Linienbreiten oder eine größere Tiefenschärfe erzielbar sind. Weiterhin lässt sich die Fokussierung gezielter beeinflussen.

In der Fig. 1 beziehungsweise entsprechend in einigen der übrigen Figuren sind lediglich drei Laserlichtquellen 1a, 1b, 1c und drei Transformationsgrenzflächen 5a, 5b, 5c eingezeichnet. Dieses dient lediglich zur Verdeutlichung. Es können durchaus deutlich mehr als drei Laserlichtquellen 1a, 1b, 1c und dementsprechend mehr als drei Transformationsgrenzflächen 5a, 5b, 5c vorgesehen sein.

Die Breite einer jeder der Transformationsgrenzflächen 5a, 5b, 5c kann in X-Richtung dem zweifachen bis dreifachen des Strahldurchmessers (FW · 1 / e$^2$) der jeweiligen Laserstrahlung 2a, 2b, 2d entsprechen. Es besteht die Möglichkeit, dass die einzelnen Transformationsgrenzflächen 5a, 5b, 5c in X-Richtung voneinander beabstandet sind. Dabei können die zwischen den einzelnen Transformationsgrenzflächen 5a, 5b, 5c angeordneten Übergangsbereiche plan oder sehr steil ausgebildet sein, wobei deren Gestaltung insbesondere so gewählt werden kann, dass Laserlicht, das durch die Übergangsbereiche hindurchtritt, beispielsweise an dem Linsenmittel 6 vorbei verläuft und jedenfalls nicht zu der linienförmigen Intensitätsverteilung 8 beiträgt.

Durch die Überlagerung der Single-Mode-Laserstrahlungen der drei Laserlichtquellen 1a, 1b, 1c mit Top-Hat-Winkelverteilung hinsichtlich der X-Richtung ergibt sich in X-Richtung beziehungsweise in Richtung der Erstreckung der linienförmigen Intensitätsverteilung eine große Homogenität, die beispielsweise lediglich Abweichungen P-V (Peak to Valley) < 2% aufweisen kann.

Eine jede der Transformationsgrenzflächen 5a, 5b, 5c kann beispielsweise eine sogenannte Powelllinse sein.

Allgemein können Transformationsgrenzflächen 5a, 5b, 5c, die eine Transformation von einem Gaußprofil zu einem Top-Hat-Profil verursachen, in Ihrer Funktion auf einer Methode des Phasenschiebens basieren.

Hierzu wird als Eingangsparameter für die Optik beziehungsweise die Transformationsgrenzfläche ein idealer Gaußscher Strahl mit bekannten Parametern (Strahldurchmesser, Divergenz) angenommen. In einem iterativen Verfahren wird für das Design der Optik beziehungsweise der Transformationsgrenzfläche eine räumlich angepasste Phasenverschiebung φ generiert, welche die ursprüngliche Gaußform des Laserprofils in eine Top-Hat-Intensitätsverteilung in der Zielebene überführt.

Mathematisch kann diese Aufgabe in einem iterativen Prozess durch Minimierung des nachfolgend wiedergegebenen Funktionals R - hier in einer dimensionslosen Darstellung - gelöst werden.

$$R = \int \left| \Im \left[ \left(2/\sqrt{\pi}\right)^{1/2} e^{-x^2} e^{i\varphi} \right] - (1/\alpha)^{1/2} \mathrm{rect}(f/\alpha) \right|^2 df$$

mit

     3: Fouriertransformation,

α: räumlicher Skalierungsfaktor,

f: Frequenzvariable des Fourierraums.

Die Minimierung des Funktionales R führt zur gesuchten Phasenverteilung φ aufgrund derer die Form der Linse beziehungsweise der Transformationsgrenzfläche definiert ist.

Innerhalb des Funktionals stellt der Term $\left(2/\sqrt{\pi}\right)^{1/2} e^{-x^2}$ die Gaußsche Intensitätsverteilung des Eingangsstrahls dar, auf welche ein Phasenfaktor $e^{i\varphi}$ aufmultipliziert wird.

Um die auf den Gaußschen Strahl aufgeprägte Phasenmodulation in die gewünschte Verteilung der Ausgangsintensität zu überführen ist es notwendig diesen Term einer Fourier Transformation zu unterziehen, die in der Praxis durch eine felderzeugende Fourier-Transformations-Linse - auch kurz Feldlinse genannt - realisiert wird. Im abgebildeten Ausführungsbeispiel ist dies das Linsenmittel 6.

Der Term der Form $(1/\alpha)^{1/2}$rect(f/$\alpha$) entspricht einer Darstellung der tophatförmigen Ziel-Intensitätsverteilung.

Der Faktor $\alpha$ ist ein Parameter, der die räumliche Dimension des Zielfeldes festlegt. Durch Subtraktion der Terme der transformierten Eingangsintensitätsverteilung von der Zielintensitätsverteilung wird nun bei Minimierung des Funktionals R die gewünschte Funktionalität der Optik gewährleistet.

Bei der Ausführungsform gemäß Fig. 2 ist im Unterschied zur ersten Ausführungsform lediglich ein Laser 9 vorgesehen, der eine Laserstrahlung 10 emittieren kann, die ebenfalls mindestens hinsichtlich einer Richtung eine Single-Mode-Laserstrahlung, beispielsweise aber auch hinsichtlich beider Richtungen eine Single-Mode-Laserstrahlung sein kann. Es kann sich bei dem Laser 9 um einen Festkörperlaser, wie beispielsweise einen Nd:YAG-Laser, einen Gaslaser oder auch einen Faserlaser handeln.

Die Laserstrahlung 10 wird von zwei Strahlteilern 11, 12 und einem Spiegel 13 in drei zueinander parallelen Teilstrahlen 10a, 10b, 10c auf das Array 3' abgelenkt. Die beiden Strahlteiler 11, 12 und der Spiegel 13 dienen bei diesem Ausführungsbeispiel als Laserlichtquellen, von denen die Single-Mode-Laserstrahlung ausgeht.

Es besteht durchaus auch die Möglichkeit, Polarisationsstrahlteiler zur Aufteilung der Laserstrahlung 10 einzusetzen.

Das Array 3' weist auf seiner Austrittsseite die bereits beschriebenen Transformationsgrenzflächen 5a, 5b, 5c auf. Auf seiner Eintrittsseite ist das Array 3' plan und weist demnach keine Kollimationslinsen auf. Beispielsweise kann bereits die nicht aufgeteilte Laserstrahlung 10 des Lasers 9 durch entsprechende, nicht abgebildete Linsenmittel geformt beziehungsweise kollimiert werden.

Bei dem Ausführungsbeispiel gemäß Fig. 3 werden drei als Laserlichtquellen 14, 15, 16 dienende Laser verwendet, die jeweils eine Laserstrahlung 17, 18, 19 emittieren können, die ebenfalls mindestens hinsichtlich einer Richtung eine Single-Mode-Laserstrahlung, beispielsweise aber auch hinsichtlich beider Richtungen eine Single-Mode-Laserstrahlung sein kann. Auch bei jedem dieser Laser kann es sich um einen Festkörperlaser, wie beispielsweise einen Nd:YAG-Laser, einen Gaslaser oder auch einen Faserlaser handeln. Es sind Umlenkspiegel 13 vorgesehen, die die einzelnen Laserstrahlungen 17, 18, 19 derart ablenken, dass die Strahlwege zu dem Array 3' einander gleichen. Auf diese Weise kann gewährleistet werden, dass die Baugrößen der Laserlichtquellen 14, 15, 16 nicht die Größe der Arrays 3' bestimmen.

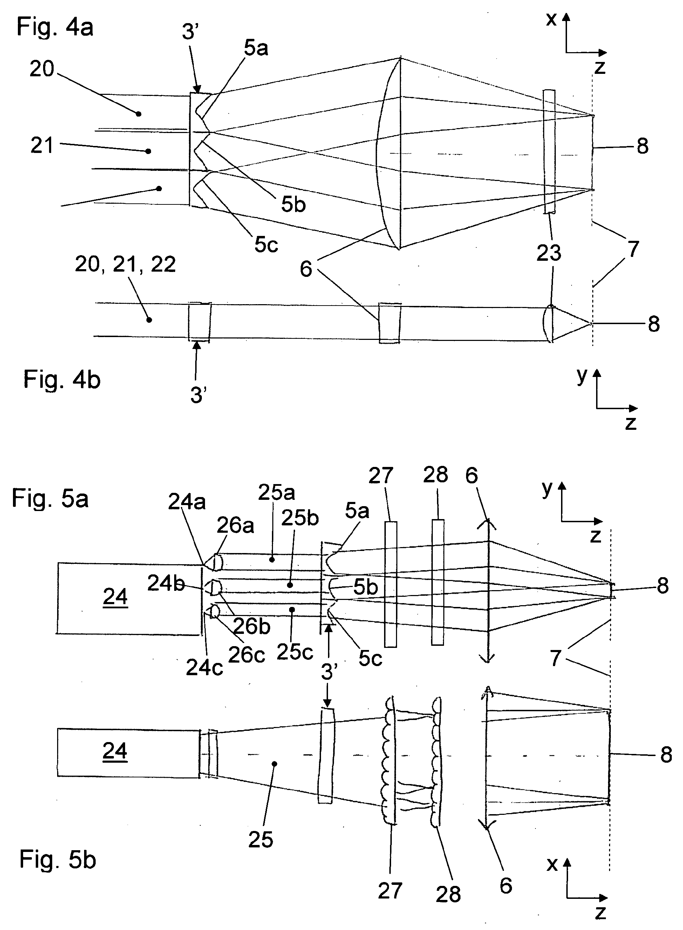

Auch bei dem Ausführungsbeispiel gemäß Fig. 4a und Fig. 4b sind drei oder mehr nicht abgebildete Laser vorgesehen, die jeweils eine Laserstrahlung 20, 21, 22 emittieren können, die ebenfalls mindestens hinsichtlich einer Richtung eine Single-Mode-Laserstrahlung, beispielsweise aber auch hinsichtlich beider Richtungen eine Single-Mode-Laserstrahlung sein kann. Auch bei jedem dieser Laser kann es sich um einen Festkörperlaser, wie beispielsweise einen Nd:YAG-Laser, einen Gaslaser oder auch einen Faserlaser handeln. Insbesondere kann es sich um von Diodenlasern gepumpte, frequenzverdoppelte Nd:YAG-Laser handeln.

Die Laserstrahlungen 20, 21, 22 und dementsprechend die Transformationsgrenzflächen 5a, 5b, 5c des Arrays 3' sind in X-Richtung nebeneinander angeordnet. Zwischen dem Linsenmittel 6 und der Arbeitsebene 7 ist eine Zylinderlinse 23 vorgesehen, die die Laserstrahlung 20, 21, 22 hinsichtlich der Y-Richtung fokussiert. Die Zylinderlinse 23 kann dabei eine beliebige Form, wie beispielsweise eine asphärische Form aufweisen. Beispielsweise weist die linienförmige Intensitätsverteilung 8 eine Länge in X-Richtung zwischen 10 mm und 1000 mm sowie eine Breite in Y-Richtung zwischen 5 $\mu$m und 200 $\mu$m auf. Dabei weist die linienförmige Intensitätsverteilung 8 in X-Richtung eine Top-Hat-Verteilung mit großer Homogenität auf.

Eine derartige linienförmige Intensitätsverteilung 8 eignet sich besonders gut für die thermische Behandlung von Si-Schichten, insbesondere für deren Rekristallisation.

Es besteht die Möglichkeit, vor der Zylinderlinse 23 oder auch vor dem Array 3' eine weitere Transformationsgrenzfläche vorzusehen, die hinsichtlich der Y-Richtung eine Top-Hat-Intensitätsverteilung der linienförmigen Intensitätsverteilung 8 bewirken kann.

Fig. 5 a und Fig. 5b zeigen einen Stack 24 von Laserdiodenbarren, bei dem in Fast-Axis-Richtung beziehungsweise in Y-Richtung drei als Laserlichtquellen 24a, 24b, 24c dienende Laserdiodenbarren übereinander angeordnet sind, von denen Laserstrahlung 25a, 25b, 25c ausgeht. Hinsichtlich der Fast-Axis-Richtung ist eine jede der Laserstrahlungen 25a, 25b, 25c eine Single-Mode-Laserstrahlung. Hinsichtlich der Slow-Axis-Richtung kann eine jede der Laserstrahlungen 25a, 25b, 25c eine Multi-Mode-Laserstrahlung sein. Die einzelnen in Slow-Axis-Richtung beziehungsweise X-Richtung nebeneinander angeordneten Emitter der als Laserlichtquellen 24a, 24b, 24c dienenden Laserdiodenbarren sind nicht gesondert abgebildet.

Zwischen den als Laserlichtquellen 24a, 24b, 24c dienenden Laserdiodenbarren und dem Array 3' sind bei dieser Ausführungsform Fast-Axis-Kollimationslinsen 26a, 26b, 26c vorgesehen. Das Licht der als Laserlichtquellen 24a, 24b, 24c dienenden Laserdiodenbarren wird von dem Linsenmittel 6 in Y-Richtung beziehungsweise in der Richtung senkrecht zur Längserstreckung der linienförmigen Intensitätsverteilung 8 überlagert. Aufgrund der Transformationsgrenzflächen 5a, 5b, 5c des Arrays 3' weist linienförmige Intensitätsverteilung 8 in der Y-Richtung eine Top-Hat-Verteilung auf.

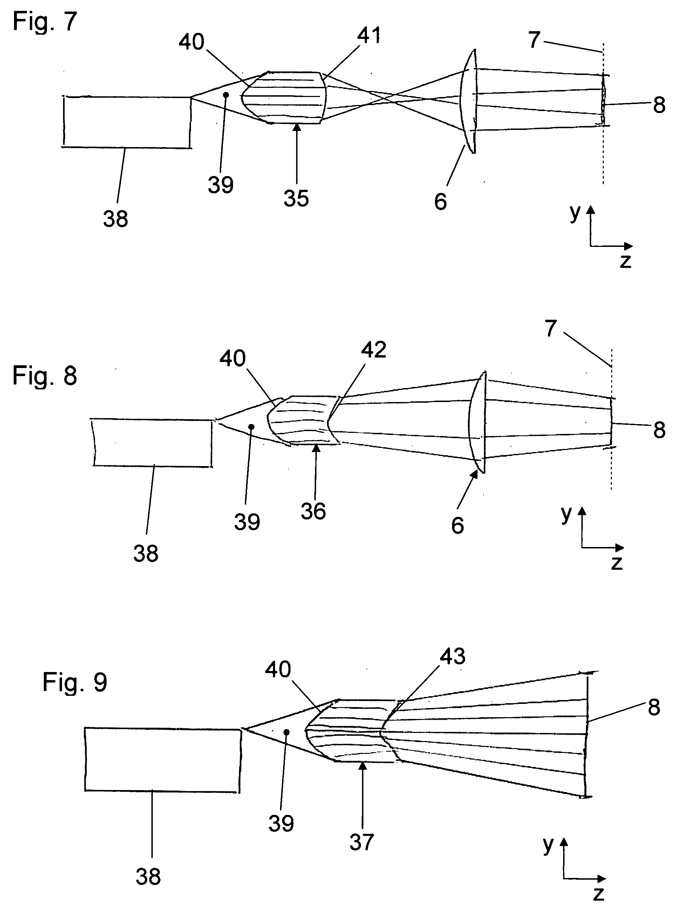

Die Fast-Axis-Kollimationslinsen 26a, 26b, 26c und die Transformationsgrenzflächen 5a, 5b, 5c können alternativ in ein Bauteil integriert sein, wie dies im Nachfolgenden noch unter Bezug auf die Fig. 7 bis Fig. 9 detailliert beschrieben wird.

Die Vorrichtung gemäß Fig. 5 a und Fig. 5b umfasst weiterhin zwei Homogenisatoren 27, 28, die in üblicher Weise durch Zylinderlinsenarrays gebildet sind. Diese Homogenisatoren 27, 28 sind so ausgebildet und in der Vorrichtung angeordnet, dass sie die Laserstrahlung 25 hinsichtlich der Slow-Axis-Richtung beziehungsweise hinsichtlich der X-Richtung homogenisieren und derart in der Arbeitsebene 7 überlagern, dass die linienförmige Intensitätsverteilung 8 auch in der X-Richtung eine Top-Hat-Verteilung aufweist. Diese Homogenisierung und Erzielung einer Top-Hat-Verteilung in Slow-Axis-Richtung ist als solche aus dem Stand der Technik bekannt.

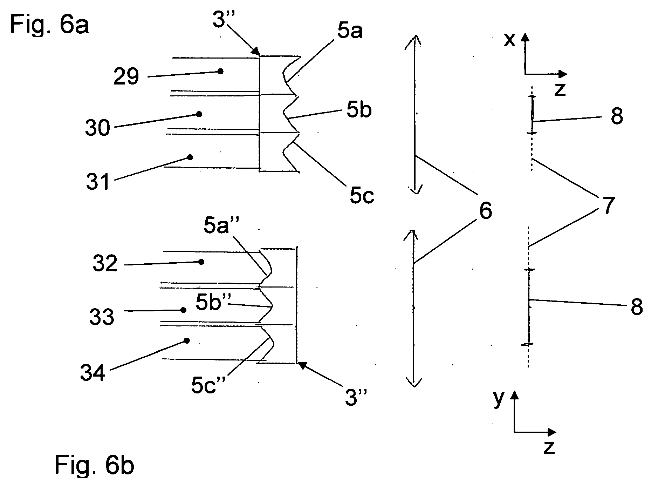

Bei dem Ausführungsbeispiel gemäß Fig. 6a und Fig. 6b sind neun oder mehr nicht abgebildete Laser vorgesehen, die jeweils eine Laserstrahlung 29, 30, 31, 32, 33, 34 emittieren können, die hinsichtlich beider Richtungen eine Single-Mode-Laserstrahlung ist. Auch bei jedem dieser Laser kann es sich um einen Single-Mode-Diodenlaser-Stack, einen Festkörperlaser, wie beispielsweise einen Nd:YAG-Laser, einen Gaslaser oder auch einen Faserlaser handeln.

Die Laserstrahlungen 29, 30, 31, 32, 33, 34 sind zweidimensional nebeneinander und übereinander angeordnet. Das Array 3" weist auf seiner Austrittsseite die bereits beschriebenen, in X-Richtung nebeneinander angeordneten Transformationsgrenzflächen 5a, 5b, 5c auf, die die Laserstrahlungen 29, 30, 31 hinsichtlich der X-Richtung in eine Top-Hat-Winkelverteilung transformieren können. Eingangsseitig weist das Array 3" in Y-Richtung nebeneinander angeordnete Transformationsgrenzflächen 5a", 5b", 5c" auf, die die Laserstrahlungen 32, 33, 34 hinsichtlich der Y-Richtung in eine Top-Hat-Winkelverteilung transformieren können. Die Intensitätsverteilung 8 in der Arbeitsebene 7 weist somit hinsichtlich beider Richtungen X, Y eine Top-Hat-Verteilung auf und ist auch hinsichtlich beider Richtungen X, Y sehr homogen. Die Intensitätsverteilung 8 ist keine linienförmige Intensitätsverteilung sondern eine beispielsweise rechteckige oder quadratische Intensitätsverteilung.

Aus Fig. 7 bis Fig. 9 ist die Integration einer Fast-Axis-Kollimationslinse und einer Transformationsgrenzfläche in ein Bauteil 35, 36, 37 ersichtlich.

In Fig. 7 geht von einem Halbleiterlaser 38 eine Laserstrahlung 39 aus. Das Bauteil 35 weist auf seiner als Eintrittsfläche dienenden ersten Oberfläche eine konvexe Kollimationsgrenzfläche 40 auf, die als Fast-Axis-Kollimationslinse dient. Das Bauteil 35 weist auf seiner als Austrittsfläche dienenden zweiten Oberfläche eine konvexe Transformationsgrenzfläche 41 auf, die die Laserstrahlungen 39 hinsichtlich der Y-Richtung in eine Top-Hat-Winkelverteilung transformieren kann. Die konvexe Transformationsgrenzfläche 41 kann ebenfalls eine Powelllinse sein beziehungsweise durch Minimierung des Funktionals R generiert werden. Von dem Linsenmittel 6 wird die Top-Hat-Winkelverteilung in der Arbeitsebene 7 in eine Intensitätsverteilung 8 mit einem Top-Hat-Profil umgewandelt.

Von der Ausführungsform gemäß Fig. 7 unterscheidet sich diejenige gemäß Fig. 8 lediglich dadurch, dass die Transformationsgrenzfläche 42 des Bauteils 36 konkav geformt ist.

Bei der Ausführungsform gemäß Fig. 9 weist das Bauteil 37 auf seiner zweiten Oberfläche eine konkave Transformationsgrenzfläche 43 auf, die derart gestaltet ist, dass im Nahfeld hinter dem Bauteil 37 ohne Fourierlinse eine Intensitätsverteilung 8 mit einem Top-Hat-Profil entsteht. Die Transformationsgrenzfläche 43 kann auch konvex ausgebildet sein.

**Patentansprüche**

1. Vorrichtung zur Strahlformung, umfassend

- mindestens zwei Laserlichtquellen (1a, 1b, 1c), die Laserstrahlung (2a, 2b, 2c) emittieren können, wobei die Laserstrahlung (2a, 2b, 2c) zumindest hinsichtlich einer Richtung (X, Y) senkrecht zur Ausbreitungsrichtung (Z) eine Single-Mode-Laserstrahlung ist,

- Optikmittel, die die Laserstrahlung (2a, 2b, 2c) der mindestens zwei Laserlichtquellen (1a, 1b, 1c) zumindest teilweise überlagern und derart beeinflussen, dass die Laserstrahlung (2a, 2b, 2c) in einer Arbeitsebene (7) eine Intensitätsverteilung (8) aufweist, die zumindest hinsichtlich einer Richtung (X, Y) senkrecht zur Ausbreitungsrichtung (Z) einer Top-Hat-Intensitätsverteilung entspricht, **dadurch gekennzeichnet, dass** die Optikmittel mehrere optisch funktionale Transformationsgrenzflächen (5a, 5b, 5c) umfassen, wobei der Laserstrahlung (2a, 2b, 2c) einer jeder der Laserlichtquellen (1a, 1b, 1c) eine der Transformationsgrenzflächen (5a, 5b, 5c) derart zugeordnet ist, dass jeweils die Laserstrahlung (2a, 2b, 2c) einer der Laserlichtquellen (1a, 1b, 1c) durch die zugeordnete Transformationsgrenzfläche (5a, 5b, 5c) derart hindurch treten kann, dass sie nach der Transformation zumindest hinsichtlich einer Richtung (X, Y) senkrecht zur Ausbreitungsrichtung (Z) eine Top-Hat-Winkelverteilung aufweist, wobei die Optikmittel Linsenmittel (6) in einer Fourieranordnung umfassen, die die Laserstrahlung (2a, 2b, 2c) der mindestens zwei Laserlichtquellen (1a, 1b, 1c) überlagern, wobei die Linsenmittel (6) in Ausbreitungsrichtung (Z) der zu beeinflussenden Laserstrahlung (2a, 2b, 2c) hinter den mehreren Transformationsgrenzflächen (5a, 5b, 5c) angeordnet sind.

2. Vorrichtung nach Anspruch 1, **dadurch gekennzeichnet, dass** die Transformationsgrenzflächen (5a, 5b, 5c) in einem Array (3) angeordnet sind.

3. Vorrichtung nach Anspruch 2, **dadurch gekennzeichnet, dass** das Array (3, 3") ein eindimensionales oder ein zweidimensionales Array (3, 3") ist.

4. Vorrichtung nach einem der Ansprüche 1 bis 3, **dadurch gekennzeichnet, dass** die Transformationsgrenzflächen (5a, 5b, 5c) als Powelllinse ausgebildet sind oder Teil einer Powelllinse sind.

5. Vorrichtung nach einem der Ansprüche 1 bis 4, **dadurch gekennzeichnet, dass** die Laserlichtquellen (1a, 1b, 1c) unterschiedliche Wellenlängen aufweisen und/oder unterschiedliche Lasertypen sind.

6. Vorrichtung nach einem der Ansprüche 1 bis 5, **dadurch gekennzeichnet, dass** die Transformationsgrenzflächen (5a, 5b, 5c) unsymmetrisch ausgebildet sind.

7. Vorrichtung nach einem der Ansprüche 1 bis 6, **dadurch gekennzeichnet, dass** mindestens zwei Transformationsgrenzflächen (5a, 5b, 5c; 5a", 5b", 5c") in Ausbreitungsrichtung (Z) der zu beeinflussenden Laserstrahlung (2a, 2b, 2c) hintereinander angeordnet sind.

8. Verfahren zur Strahlformung, **gekennzeichnet durch** folgende Verfahrensschritte:

- die von mindestens einer ersten und mindestens einer zweiten Laserlichtquelle (1a, 1b, 1c) ausgehenden Laserstrahlungen (2a, 2b, 2c), die jeweils zumindest hinsichtlich einer ersten Richtung (X, Y) senkrecht zur Ausbreitungsrichtung (Z) Single-Mode-Laserstrahlungen sind, werden getrennt voneinander **durch** jeweils eine Transformationsgrenzfläche (5a, 5b, 5c) derart transformiert, dass die mindestens zwei Laserstrahlungen (2a, 2b, 2c) nach der Transformation zumindest hinsichtlich der ersten Richtung eine Top-Hat-Winkelverteilung aufweisen,
- die mindestens zwei nach der Transformation zumindest hinsichtlich der ersten Richtung eine Top-Hat-Winkelverteilung aufweisenden Laserstrahlungen (2a, 2b, 2c) werden von Linsenmitteln (6) in einer Fourieranordnung überlagert, so dass die überlagerten Laserstrahlungen (2a, 2b, 2c) in einer Arbeitsebene eine Intensitätsverteilung (8) aufweisen, die zumindest hinsichtlich der ersten Richtung einer Top-Hat-Intensitätsverteilung entspricht.

**Claims**

1. Device for beam shaping, comprising

- at least two laser-light sources (1a, 1b, 1c) that can emit laser radiation (2a, 2b, 2c), wherein the laser radiation (2a, 2b, 2c) is a single-mode laser radiation, at least in respect of one direction (X, Y) perpendicular to the direction of propagation (Z),
- optical means that at least partly superpose and influence the laser radiation (2a, 2b, 2c) of the at least two laser-light sources (1a, 1b, 1c) to the extent that the laser radiation (2a, 2b, 2c) has in a work plane (7) an intensity distribution (8) that at least in respect of one direction (X, Y) perpendicular to the direction of propagation (Z) corresponds to a top-hat intensity distribution,

**characterized in that** the optical means comprise a plurality of optically functional transformation interfaces (5a, 5b, 5c), wherein the laser radiation (2a, 2b, 2c) from each of the laser-light sources (1a, 1b, 1c) is associated with one of the transformation interfaces (5a, 5b, 5c) such that in each case the laser radiation (2a, 2b, 2c) of one of the laser-light sources (1a, 1b, 1c) can pass through the associated transformation interface (5a, 5b, 5c) such that it has a top-hat angle distribution at least in respect of one direction (X, Y) perpendicular to the direction of propagation (Z), after the transformation, wherein the optical means comprise lens means (6) in a Fourier arrangement, which lens means superpose the laser radiation (2a, 2b, 2c) of the at least two laser-light sources (1a, 1b, 1c), wherein the lens means (6) are arranged downstream of the plurality of transformation interfaces (5a, 5b, 5c), in the direction of propagation (Z) of the laser radiation (2a, 2b, 2c) to be influenced.

2. Device according to Claim 1, **characterized in that** the transformation interfaces (5a, 5b, 5c) are arranged in an array (3).

3. Device according to Claim 2, **characterized in that** the array (3, 3") is a one-dimensional or two-dimensional array (3, 3'').

4. Device according to one of Claims 1 to 3, **characterized in that** the transformation interfaces (5a, 5b, 5c) are embodied as a Powell lens or are part of a Powell lens.

5. Device according to one of Claims 1 to 4, **characterized in that** the laser-light sources (1a, 1b, 1c) have differing wavelengths and/or are different types of laser.

6. Device according to one of Claims 1 to 5, **characterized in that** the transformation interfaces (5a, 5b, 5c) have an asymmetrical design.

7. Device according to one of Claims 1 to 6, **characterized in that** at least two transformation interfaces (5a, 5b, 5c; 5a", 5b", 5c") are arranged in succession in the direction of propagation (Z) of the laser radiation (2a, 2b, 2c) to be influenced.

8. Method for beam shaping, **characterized by** the following method steps:

- the laser radiations (2a, 2b, 2c) emanating from at least a first and at least a second laser-light source (1a, 1b, 1c), which laser radiations respectively are single-mode laser radiations, at least in respect of a first direction (X, Y) perpendicular to the direction of propagation (Z), are transformed individually by in each case one transformation interface (5a, 5b, 5c) such that the at least two laser radiations (2a, 2b, 2c) have a top-hat angle distribution, at least in respect of the first direction, after the transformation,
- the at least two laser radiations (2a, 2b, 2c) which have a top-hat angle distribution, at least in respect of the first direction, after the transformation, are superposed by lens means (6) in a Fourier arrangement such that the superposed laser radiations (2a, 2b, 2c) have in a work plane an intensity distribution (8) that at least in respect of the first direction corresponds to a top-hat intensity distribution.

**Revendications**

1. Dispositif de mise en forme de faisceau, comprenant :

- au moins deux sources de lumière laser (1a, 1b, 1c), qui peuvent émettre un faisceau laser (2a, 2b, 2c), dans lequel le faisceau laser (2a, 2b, 2c) est un faisceau laser monomode dont au moins une direction (X, Y) perpendiculaire à la direction de propagation (Z),
- des moyens optiques qui superposent au moins partiellement le faisceau laser (2a, 2b, 2c) des au moins deux sources de lumière laser (1a, 1b, 1c) et influencent le faisceau laser (2a, 2b, 2c) de manière à ce qu'il présente dans un plan de travail (7) une distribution d'intensité lumineuse (8) qui correspond à une distribution d'intensité lumineuse en chapeau haut de forme dans une direction (X, Y) perpendiculaire à la direction de propagation (Z), **caractérisé en ce que** les moyens optiques comprennent une pluralité d'interfaces de transformation optiques fonctionnelles (5a, 5b, 5c), dans lequel le faisceau laser (2a, 2b, 2c) de chacune des sources lumineuses (1a, 1b, 1c) est associé à l'une des interfaces de transformation (5a, 5b, 5c) de manière à ce que le faisceau laser (2a, 2b, 2c) respectif de l'une des sources de lumière laser (1a, 1b, 1c) puisse pénétrer à travers l'interface de transformation (5a, 5b, 5c) de telle sorte qu'il présente une distribution angulaire en chapeau haut de forme au moins dans une direction (X, Y) perpendiculaire à la direction de propagation (Z), dans lequel les moyens optiques comprennent des moyens à lentilles (6) selon un agencement de Fourier, qui superposent le faisceau laser (2a, 2b, 2c) des au moins deux sources de lumière laser (1a, 1b, 1c), dans lequel les moyens à lentilles (6) sont disposés à la suite de la pluralité d'interfaces de transformation (5a, 5b, 5c) dans la direction de propagation (Z) du faisceau laser (2a, 2b, 2c) à influencer.

2. Dispositif selon la revendication 1, **caractérisé en ce que** les interfaces de transformation (5a, 5b, 5c) sont agencées en un réseau (3).

3. Dispositif selon la revendication 2, **caractérisé en ce que** le réseau (3, 3") est un réseau (3, 3") unidimensionnel ou bidimensionnel.

4. Dispositif selon l'une quelconque des revendications 1 à 3, **caractérisé en ce que** les interfaces de transformation (5a, 5b, 5c) sont réalisées sous la forme d'une lentille de Powell ou d'une partie d'une lentille de Powell.

5. Dispositif selon l'une quelconque des revendications 1 à 4, **caractérisé en ce que** les sources de lumière laser (1a, 1b, 1c) présentent des longueurs d'onde différentes et/ou sont des types de lasers différents.

6. Dispositif selon l'une quelconque des revendications 1 à 5, **caractérisé en ce que** les interfaces de transformation (5a, 5b, 5c) sont réalisées de manière non symétrique.

7. Dispositif selon l'une quelconque des revendications 1 à 6, **caractérisé en ce qu'**au moins deux interfaces de transformation (5a, 5b, 5c ; 5a", 5b", 5c") sont agencées consécutivement dans la direction de propagation (Z) du faisceau laser (2a, 2b, 2c) à influencer.

8. Procédé de mise en forme de faisceau, **caractérisé par** les étapes de procédé suivantes :

- les faisceaux laser (2a, 2b, 2c) provenant d'au moins une première et d'au moins une deuxième source de lumière laser (1a, 1b, 1c), qui sont des faisceaux laser monomode dans au moins une première direction (X, Y) perpendiculaire à la direction de propagation (Z), sont séparés l'un de l'autre par une interface de transformation (5a, 5b, 5c) respective de manière à ce que les au moins deux faisceaux laser (2a, 2b, 2c) présentent après la transformation une distribution angulaire en chapeau haut de forme dans au moins la première direction,
- les au moins deux faisceaux laser (2a, 2b, 2c) présentant une distribution angulaire en chapeau haut de forme dans au moins la première direction après la transformation sont superposés par des moyens à lentilles (6) selon un agencement de Fourier de manière à ce que les faisceaux laser (2a, 2b, 2c) superposés présentent dans un plan de travail une distribution d'intensité (8) qui correspond à une distribution d'intensité en chapeau haut de forme dans au moins la première direction.

## Fig. 1

## Fig. 2

## Fig. 3

Fig. 4a

Fig. 4b

Fig. 5a

Fig. 5b

Fig. 6a

3"

5a

29

30

5b

31

5c

5a"

32

5b"

33

34

5c"

3"

6

x

z

8

7

8

y

z

Fig. 7

40    41    7

39    35    6    8

38

y
z

Fig. 8

40    42    7

39    36    6    8

38

y
z

Fig. 9

40    43    8

39    37

38

y
z

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20050157762 A1
- WO 2007140969 A1